# EUROPEAN PATENT APPLICATION

(11) **EP 1 886 735 A2**
(43) Date of publication of application: **13.02.2008**
(21) Application number: 07015292.1
(22) Date of filing: 03.08.2007
(51) Int. Cl.: B05B 7/08

(54) **Pistol for integrated administering a liquid and a compressed air flow**

(30) Priority: 03.08.2006 BR PI0603247; 06.02.2007 BR MU8700238
(71) Applicant: Machsystem Indústria e Comércio de Máquinas Ltda., 89203-210 Joinvile (BR)
(72) Inventor: Rieger, Johannes Oskar, Sao Paolo 04619-005 (BR)
(74) Representative: Hruschka, Jürgen

(57) **Abstract**

The present invention refers to a pistol for integrated administering a liquid and an air flow comprising a monoblock body (2.1) in which channel passages are provided in parallel, whereby the body (2.1) comprises actuation devices (2.14) to selectively deblock the respective channel passages.

## Description

### FIELD OF INVENTION

The present invention refers to a pistol specially developed to be used together with operative machines in general, such as wells or milling machines, lathes and machining centres aiming at integrating in a single manual device the needed means to allow an integrated administration (in a simultaneous or alternate manner) of a liquid and a compressed air flow.

### BACKGROUND OF THE INVENTION

As it is common knowledge, machine tools such as milling machines, lathes and others or even machining centres do work raw blocks (normally made of metal) so that it becomes necessary to remove in a controlled way small portions of material in order to clean and thus obtain the desired workpiece or component, thereby generating a great volume of splinter as waste.

Tools functioning from operative machines (and similar equipment) much depend on being maintained at a temperature suitable to the means of cutting, rough-hewing etc, whereby such a condition is obtained before a constant flow of cooling liquid is being directed to the region where the material is being effectively worked.

When a workpiece is concluded, it is very common that the machine operator needs to use a device, which, when connected to a hose, allows a liquid flush under pressure (normally liquid of coolant), which is being specially employed to clean the splinter part accumulated on the workpiece after finishing the machining.

Another separate device, similar to the first one, is used to allow the application of compressed air flush aiming at allowing a first drying stage of the workpiece before it is going to be removed from the machine tools.

In general, lines for the devices allowing controlled application of pressurized liquid flow and compressed air flow, respectively, are independently and directly connected to respective hoses.

This fact results in the condition that the machine operator has to alternatively handle one or another device, which is cumbersome and counter productive.

### BRIEF DESCRIPTION OF THE INVENTION

Starting from this prior art, the invention is aimed to a pistol for the integrated administering of a pressurized liquid and of a compressed air flow according to the features of claim 1. The pistol as a single anatomic device combines the needed means for administering a liquid flow that may be then used to apply cleaning of a workpiece that was newly produced as well as the needed means to allow the application of a compressed air flow that is, thus, used to dry the workpiece.

The pistol according to the invention has the advantage that it can be held by one hand and at the same time fingers of the hand can alternatively or simultaneously activate both fluid channels.

The pistol according to the invention can be directly connected to a pair of hoses, one hose for providing liquid feeding and another hose for providing air feeding.

The pistol according to the invention comprises actuation devices for each one of the two functions which can be separately applied by the operator allowing him to totally independently select either the liquid application function or the compressed air flow application function.

Further embodiments do become apparent from dependent claims 1 - 9.

### BRIEF DESCRIPTION OF FIGURES

The invention will be described in relation to the accompanying drawings, in which:
- Figure 1.1: schematically illustrates a partially sectional side view of a first embodiment of the pistol according to the invention;
- Figure 1.2: schematically illustrates in greater scale the region of the two shutter valves of the pistol of Fig.1.1.;
- Figure 1.3: illustrates a view in greater scale of the frontal region of the pistol of Fig. 1.1;
- Figure 1.4: illustrates a view in greater scale of the region of the handhold of the pistol of Fig. 1.1;
- Figure 1.5: illustrates a view of the pistol of Fig. 1.1, exemplifying the condition of activating its trigger;
- Figure 2.1: illustrates a perspective view of a second embodiment of the pistol according to the invention;
- Figure 2.2: illustrates a side view of the pistol of Fig. 2.1;
- Figure 2.3: illustrates a cut view from figure 2.2 along lines A-A in Fig. 2.2;
- Figure 2.4: illustrates a front view of the pistol as indicated by arrow A in Fig. 2.1;
- Figure 2.5: illustrates a cut view from Fig. 2.4 along lines B-B in Fig. 2.3;
- Figure 2.6: illustrates another cut view from Fig. 2.4 along lines C-C in Fig. 2.3; and
- Figure 2.7: illustrates a perspective view of a third embodiment of the pistol according to the invention.

### DETAILED DESCRIPTION OF INVENTION

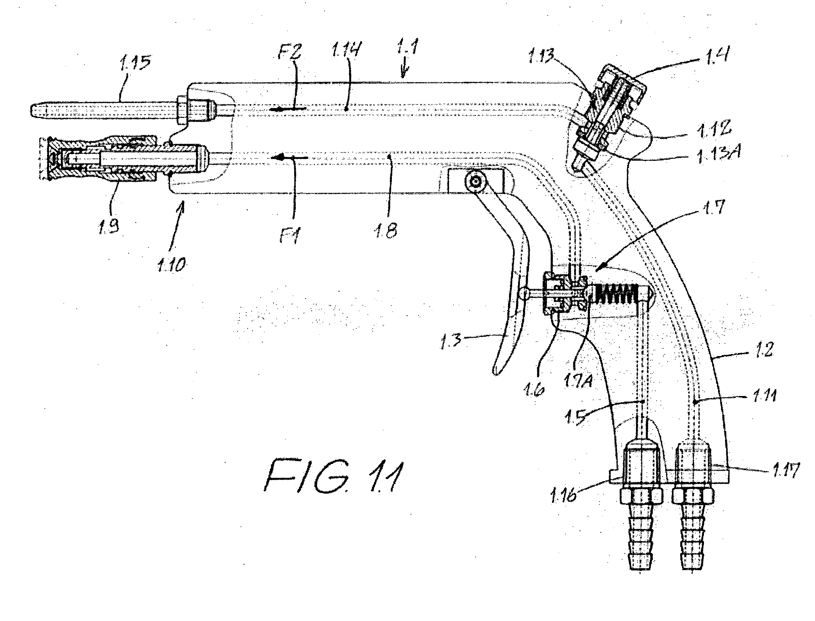

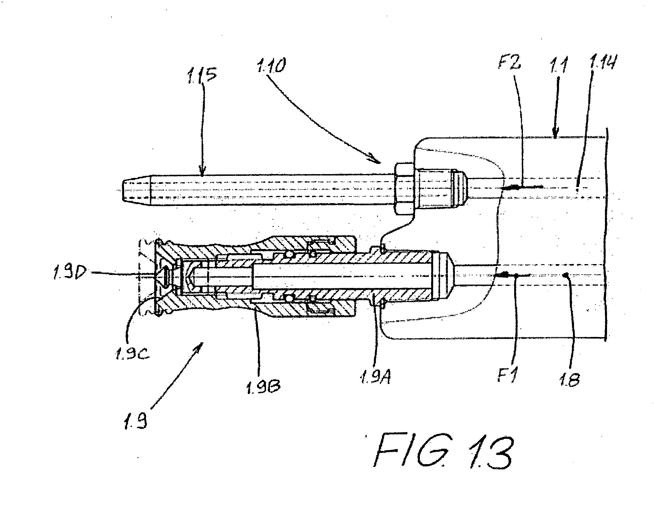

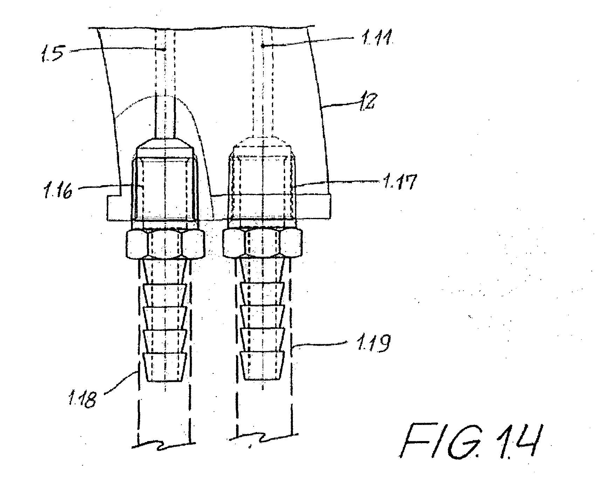

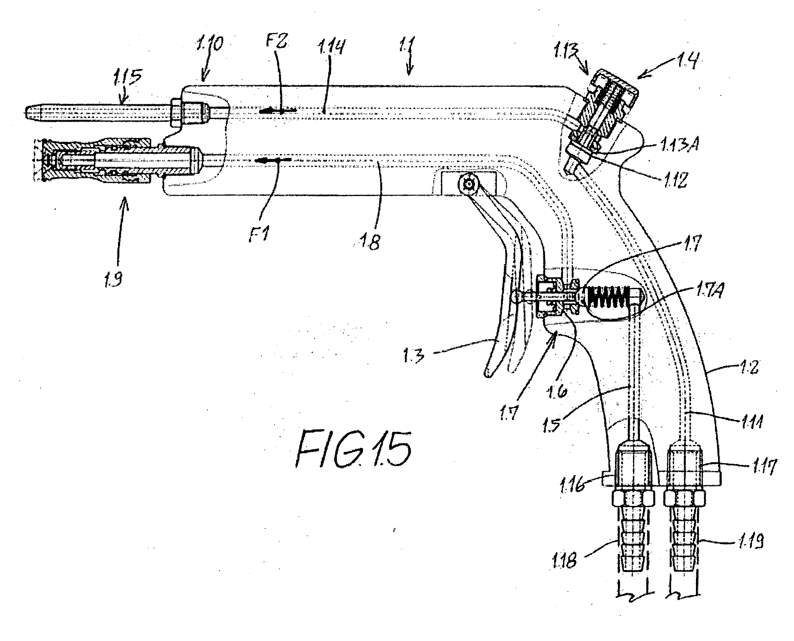

With reference to figures 1.1 - 1.5, the pistol according to the invention for integrated administering a pressurized liquid and a compressed air flow comprises a monoblock body 1.1 embodied as a pistol, preferably produced of metal, which comprise a handhold 1.2, a trigger 1.3 and a compression button 1.4.

The monoblock body 1.1 includes a first channel passage 1.5 that begins in the handhold 1.2 leading to an assembling housing 1.6, which comprises a shutter device or valve 1.7 that is activated by trigger 1.3. Channel 1.5 after valve 1.7 continues in a passage 1.8 that ends in a first outlet in the form of a sprinkler 1.9 that is assembled in the frontal edge 1.10 of monoblock body 1.1.

The monoblock body 1.1 also includes a second channel passage 1.11 that passes the handhold 1.2 and leads to assembling housing 1.12. which comprises another shutter device or valve 1.13 that is operated by a compression button 1.4.

After the valve 1.13 a channel passage 1.14 is provided that ends in an outlet in the form of a tubular elongation 1.15, which is arranged above the sprinkler 1.9.

Channels 1.5 and 1.11 in the lower edge of handhold 1.2 terminate in threaded connections 1.16 and 1.17 which are connected to hoses 1.18 and 1.19, in which liquid under pressure and compressed air, respectively, is flowing.

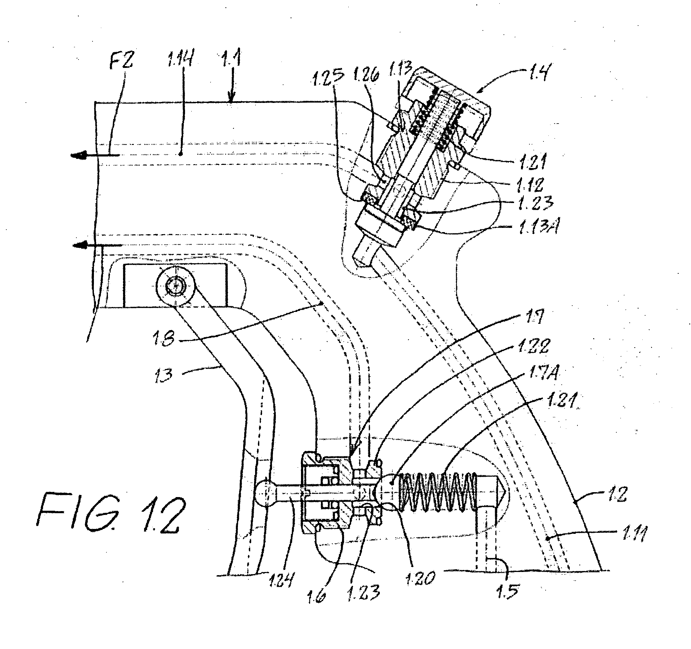

Valves 1.7 and 1.13 in principle provide the same basic function, only differing in the design of their employed shutters (a sphere 1.7A in valve 1.7 and a disc 1.13A in valve 1.13), as it may be observed in figure 1.2, in which both devices are shown in greater scale.

Basic differences between valves 1.7 and 1.13 can also be seen in the fact the first one operates with liquid flow under pressure while the second one operates with compressed air.

In essence, valves 1.7 and 1.13 each comprise a shutter element (1.7A and 1.13A) which is supported against its respective reception 1.20 by the action of a respective spring 1.21.

In valve 1.7, the reception 1.20 forms an integral part of the valve body 1.22 that includes an axial channel 1.23 that is crossed by shaft 1.24 operated by trigger 1.3.

In valve 1.13, the reception 1.25 is defined as a surface against which disc 1.13A is supported by a spring function 1.21, the disc 1.13A being operated when button 1.4 is pressed.

Axial channel 1.23 comprises small radial channels that open in a ring recess 1.26 that surrounds valve body 1.23.

The principle of valve operation 1.13 (that is the same principle of operation of valve 1.7) consists in that, when being compressed, its shutter element will keep off from its reception, thus allowing a flow (in this case of compressed air) from channel 1.11 to channel 1.14, the flow being effectively directed to pistol outlet, herein represented by tubular elongation 1.15.

This basic principle is also applied in relation to valve 1.7, which operates, as already mentioned, with liquid under pressure.

In figures 1.1 - 1.5, arrows F1 and F2 indicate, respectively, liquid and compressed air flow that passes the pistol body 1.1.

Sprinkler 1.9, specially shown in figure 1.2, presents a construction that allows the adjustment of flow patterns induced to the liquid flow, said sprinkler comprises a body 1.9A, which externally receives an adjustment component in the form of a sleeve 1.9B, the sleeve 1.9B at its conical opening 1.9C comprising a pin 1.9D that partially penetrates opening 1.9C, whereby the pin 1.9D takes a position related to function of positioning adjustment component 1.9B.

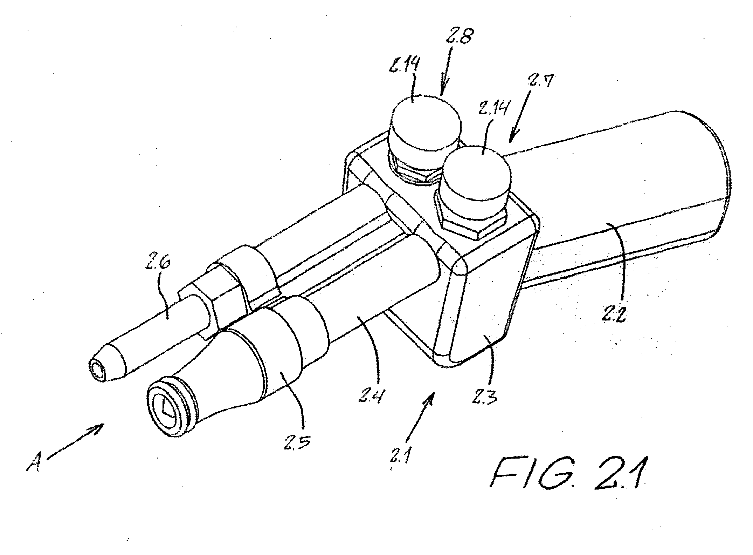

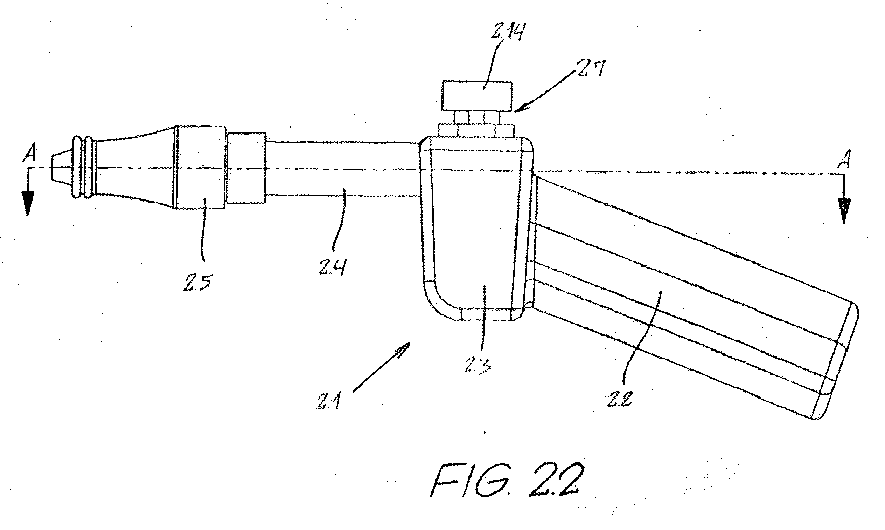

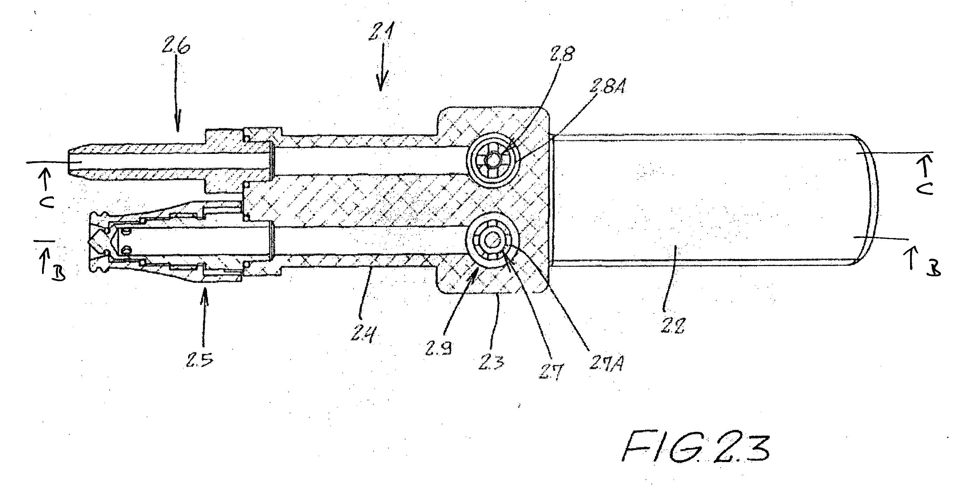

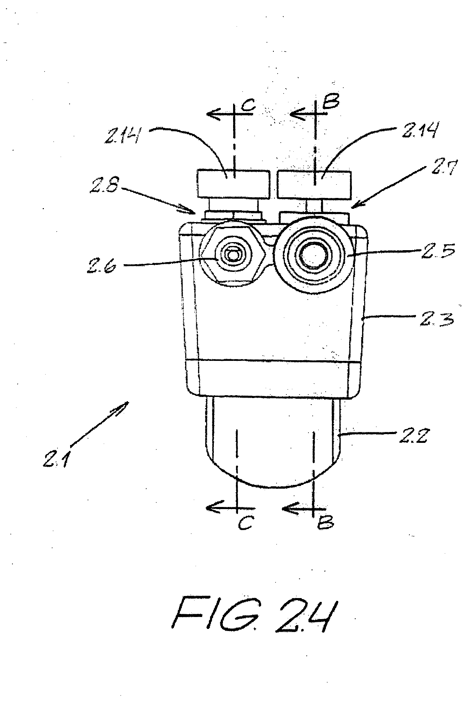

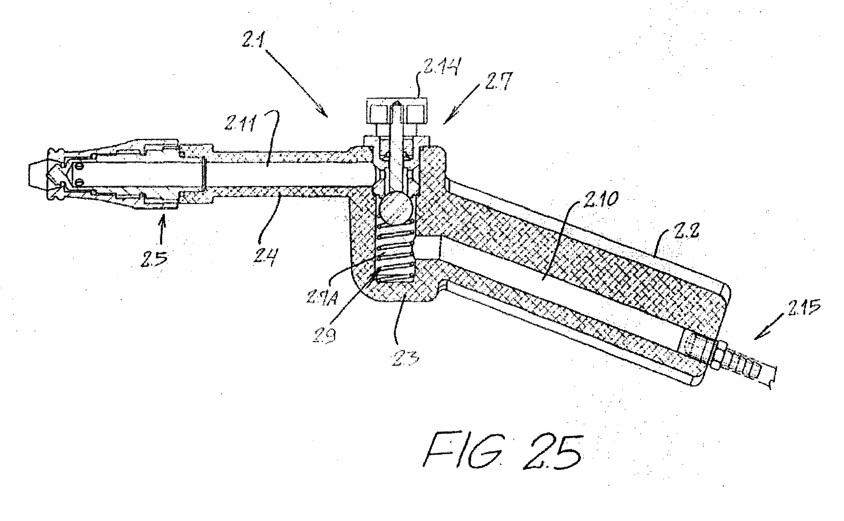

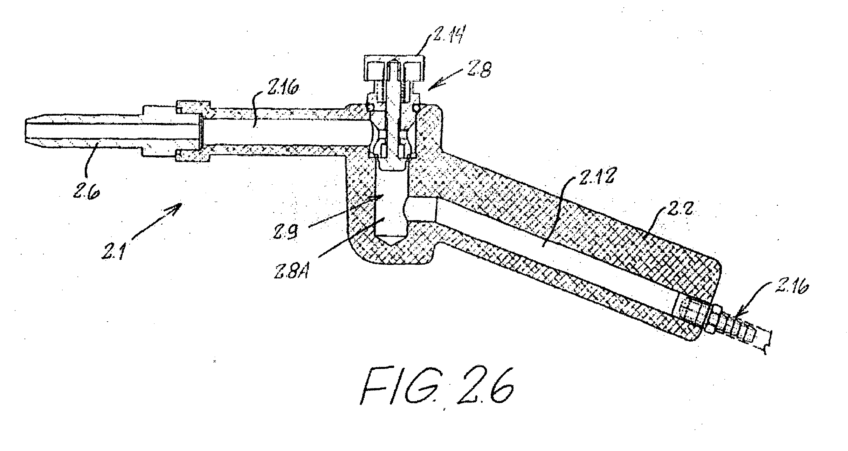

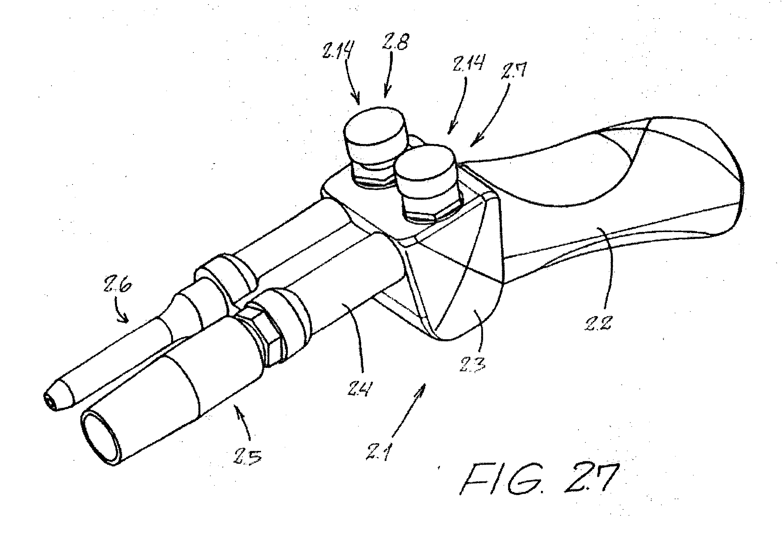

With reference to figures 2.1 - 2.7 further embodiments of a pistol according to the invention are shown, which present constructive variations.

The pistol also comprises a monoblock body 2.1 embodied in the format of a pistol, wherein said main body 2.1 is preferably metallic.

The main body 2.1 comprises a handhold portion 2.2 which is slightly inclined and which comprises at its forward region an integral block 2.3 from which starts a structural projection 2.4 towards the front end where there is a sprinkler 2.5 and a tubular elongation 2.6.

Integral block 2.3 receives a valve or shutter assembling 2.7 that operates liquid flow and that is arranged next to another valve or shutter 2.8, the latter being responsible for operation of compressed air flow.

Valve or shutter 2.7 is assembled in a central region 2.9 of integral block 2.3 in a housing 2.7A that is disposed in an intermediate format between a passage of a channel 2.10 that crosses the handhold 2.2, and a second channel passage 2.11 that crosses the structural projection 2.4 and terminating in sprinkler 2.5.

Another valve or shutter, indicated by numeric reference 2.8, is assembled in central region 2.9 of the same integral block 2.3 in a housing 2.8A, which is disposed, as it happens with the housing 2.7A for valve and shutter 2.7, in an intermediate form between a channel passage 2.12 that crosses the handhold 2.2 and a second channel passage 2.13 that crosses the structural projection 2.4 and terminating in the tubular elongation 2.6.

Channel passages 2.10 and 2.11 run aligned to each other and mutually parallel along the handhold 2.2 while channel passages 2.11 and 2.13 run aligned to each other and mutually parallel along structural projection 2.4 as well.

The valve or shutter 2.7 employed in this embodiment is preferably similar to the valve used in first embodiment with the only difference that valve or shutter 2.7 is not activated by a trigger but by a compression button 2.14. Likewise valve or shutter 2.8, which is preferably similar to the corresponding valve in the first embodiment of the pistol, is activated by another compression button 2.14.

As in the first embodiment, thread connections indicated by reference numerals 2.15 and 2.16 are provided that are coupled to the handhold 2.2 and that serve to allow coupling of hoses (not illustrated), that feed the pistol with distinctive flows of liquid and compressed air.

The functioning of the second embodiment of the pistol is exactly the same as described for the first embodiment.

The second embodiment presents the advantage of better practicability since the commands for administering liquid flow and compressed air are disposed side by side and may be activated by the operator only using his/her thumb. Also, the construction of this variation of the pistol is simpler as regards the internal channels, which fact will positively influence the relative manufacturing costs.

## Claims

1. Pistol for integrated administering a liquid and an air flow comprising a monoblock body (1.1;2.1) with a first channel passage (1.5,1.8;2.10,2.11) leading from a first inlet (1.16;2.15) to a first outlet (1.9;2.5) and a second channel passage (1.11,1.14;2.12,2.13) leading from a second inlet (1.17;2.16) to a second outlet (1.15; 2.6), wherein the monoblock body (1.1; 2.1) further comprises actuation devices (1.3,1.4; 2.14) arranged in the first channel passage (1.5,1.8; 2.10,2.11) and in the second channel passage (1.11,1.14; 2.12,2.13), respectively, to selectively deblock the respective channel passages (1.5,1.8; 2.10,2.11; 1.11,1.14; 2.12,2.13), the actuation devices (1.3,1.4; 2.14) being arranged in the monoblock body (1.1;2.1) relative to each other in such a way so as to be controllable by the fingers of the one hand holding the pistol.

2. Pistol according to claim 1, in which the first actuation device (1.3; 2.14) is cooperating with a first shutter device or valve (1.7; 2.7) arranged in the first channel passage (1.5,1.8; 2.10,2.11) and the second actuation device (1.4; 2.14) is cooperating with a second shutter device or valve (1.13; 2.8) arranged in the second channel passage (1.11,1.14; 2.12,2.13).

3. Pistol according to claim 2, in which the first actuation device is a trigger (1.3) and the second actuation device is a compression button (1.4).

4. Pistol according to claim 2, in which the first and the second actuation device are compression buttons (2.14) arranged side by side.

5. Pistol according to claim 1 or 2, in which the inlets (1.16,1.17; 2.15,2.16), the outlets (1.9,1.15; 2.5,2.6) and the actuation devices (1.13,1.4; 2.14) are threaded into the monoblock body (1.1; 2.1).

6. Pistol according to one of claims 1 to 5, in which one of the outlets (1.9,1.15; 2.5,2.6) is a sprinkler.

7. Pistol according to claim 6, in which the sprinkler (1.9; 2.5) is adapted to adjust different flow patterns.

8. Pistol according to claim 7, in which the sprinkler (1.9) is adapted to receive a sleeve (1.9B) providing a defined flow pattern.

9. Pistol according to one of claims 1 to 8, in which the monoblock body (1.1; 2.1) is made of metal.
